# EUROPÄISCHE PATENTANMELDUNG

(11) **EP 1 724 415 A2**
(43) Veröffentlichungstag der Anmeldung: **22.11.2006**
(21) Anmeldenummer: 06005234.7
(22) Anmeldetag: 15.03.2006
(51) Int. Cl.: E04G 21/32

(54) **Geregelter Zwei-Zonen-Pufferspeicher für frische Trinkwassererwärmung**

(30) Priorität: 17.05.2005 DE 202005007941 U
(71) Anmelder: Carl Capito Heiztechnik GmbH, 57290 Neunkirchen (DE)
(72) Erfinder: von Gradowski, Bernhard, 57520 Friedewald (DE)
(74) Vertreter: Grosse, Wolf-Dietrich Rüdiger

(57) **Zusammenfassung**

Bei einem geregelten Zwei-Zonen-Pufferspeicher für frische Trinkwassererwärmung, umfassend einen Behälter (1) zum Speichern von Energie in Pufferwasser und / oder Erwärmung bzw. Erhitzung von Trinkwasser, wobei der Behälter (1) mittels einer Ronde (2) in zwei Kammern (3, 4) unterteilt ist, ist die obere Kammer (3) als Hochtemperaturbereich und die untere Kammer (4) als Niedertemperaturbereich ausgebildet.

## Beschreibung

Die Erfindung betrifft einen Behälter zum Speichern von Energie in Pufferwasser und / oder Erwärmung bzw. Erhitzung von Trinkwasser, wobei der Behälter mittels einer Ronde in zwei Kammern unterteilt ist.

Derartige Warmwasserspeicher sind als Schichtenspeicher bekannt. Im Warmwasserspeicher ist mindestens ein Wärmetauscher angeordnet, der das Pufferwasser im Speicher erwärmt und mindestens ein Wärmetauscher für die Trinkwassererwärmung. Das Heizmedium für die Wärmetauscher wird in bekannten Anlagen wie einem mit Brennstoffen beheizten Kessel, einer Solarwärmeanlage, durch ein Blockheizkraftwerk, durch Fernwärme usw. erwärmt.

Eine derartige Anlage, insbesondere eine Heizanlage mit einem Pufferspeicher bzw. Kombispeicherkessel, der als solarer Schichtspeicher optional mit integrierter, gas- oder ölbefeuerter Brennkammer ausgebildet ist und mehrere Kreisläufe vereint, wie einen Solarkreislauf, einen Kreislauf für Wasch- und Duschwasser und eine Versorgung einer Heizung, sowie Anschlüsse zur Aufnahme von an die Verbraucherleitungen angeschlossenen Wärmetauschern, ist aus der DE 102 47 822 A1.

Bei dieser Anlage ist im unteren Bereich des Pufferspeichers bzw. Kombispeicherkessels oberhalb eines dort angeschlossenen Solar - Wärmetauschers ein den Innenraum des Kessels unterteilender Schichtungsstabilisator angeordnet. Über diesen Schichtungsstabilisator ist der untere Kesselraum mit dem oberen, größeren Puffer - Kesselraum strömungstechnisch verbunden.

Das in einer derartigen Anlage erwärmte Trinkwarmwasser wird von mindestens einem Wärmetauscher - Anschlussstutzen den Verbrauchern zugeleitet. Der Wärmetauscher für das Trinkwarmwasser ist im oberen Bereich des Behälters und somit in der Hochtemperaturzone angeordnet. Die Trinkwasserauslauftemperatur ist daher abhängig von der Temperatur in diesem Bereich.

Eine derartige Anordnung ist bei Einsatz von beispielsweise hoch- / kalkhaltigem Wasser von Nachteil, da durch die hohen Temperaturen vermehrt Kalk ausgefällt wird und der Kalk den Wärmetauscher zusetzt. Ein Trinkwarmwasser ― Durchfluss wird nach kurzer Zeit unmöglich. Die Temperatur im oberen Bereich unterliegt starken Schwankungen, da das Temperaturniveau beispielsweise von der Sonneneinstrahlung und der Sonnenintensität (bei Versorgung über eine Solarleitung) abhängig ist. Die Trinkwarmwasser ― Auslauftemperatur unterliegt daher ebenfalls großen Schwankungen.

Ausgehend von einem solchen Stand der Technik liegt der Erfindung daher die Aufgabe zugrunde, einen gattungsgemäßen Pufferspeicher zu schaffen, der ein gleichmäßiges Temperaturniveau des entnommenen Trinkwarmwassers, insbesondere auch bei Abgabe großer Wassermengen, ermöglicht, eine Verkalkung der Wärmetauscher vermindert oder verhindert und die Gefahr der Bildung von Krankheitserregern ausschließt.

Diese Aufgabe wird erfindungsgemäß dadurch gelöst, dass bei einem in zwei Kammern unterteilten Behälter des Pufferspeichers die obere Kammer als Hochtemperaturzone und die untere Kammer als Niedertemperaturzone ausgebildet ist.

Ausgestaltungen der Erfindung sind in den Unteransprüchen angegeben.

Der Warmwasserspeicher bevorratet dabei in der oberen Kammer, also der Hochtemperaturzone, Pufferwasser mit einer Temperatur von bis zu 95°C. Dabei ist die obere Kammer vorzugsweise durch eine Ronde von der unteren Kammer getrennt. In der unteren Kammer sind gemäß der Erfindung die Wärmetauscher eingebaut. Diese befinden sich somit in der Niedertemperaturzone von beispielsweise 40° bis 60°C Pufferwassertemperatur. Die Temperatur ist beliebig regelbar.

Da der oder die Wärmetauscher erfindungsgemäß in der Niedertemperaturzone liegen, verringert sich die Verkalkung der Wärmetauscher, denn die Verkalkung ist umso geringer, je niedriger die Pufferwassertemperatur in der Niedertemperaturzone ist.

Nach einer Ausgestaltung der Erfindung ist an der Ronde mindestens ein Rohr angebracht, welches nach unten in die Niedertemperaturzone gerichtet ist und möglichst nah am Boden des Pufferspeichers endet. Durch dieses Rohr gelangt das Pufferwasser aus der unteren Kammer in die obere Kammer.

Eine bevorzugte Ausführung der Erfindung sieht vor, dass die Ronde zwei gegenüberliegende Rohre aufweist. Weiterhin wird der nach oben strömende Wasserfluss geteilt. Durch die Teilung wird die Verwirbelung des Wassers in der Hochtemperaturzone verringert.

Bei einer weiteren Ausführung ist vorgesehen, oberhalb der Öffnungen in der Ronde für die Rohre ein Prallblech anzubringen, um die geschichtete Entnahme aus der Hochtemperaturzone zu optimieren.

Werden in dem unteren Teil des Zwei-Zonen-Pufferspeichers nur zwei Wärmetauscher eingebaut, so kann das Rohr oder können die Rohre, welche an der Ronde befestigt sind, kürzer ausfallen, wodurch auch die Ronde eine Position einnimmt, die im Vergleich zu einem Zwei-Zonen-Pufferspeicher mit drei oder vier Wärmetauschern tiefer ist.

Die Anzahl der eingebauten Wärmetauscher ist abhängig von der zu berücksichtigenden Trinkwasserentnahme. Soll beispielsweise ein derartiger Zwei-Zonen-Pufferspeicher in einer Kaserne zum Einsatz kommen, so ist eine Trinkwasserentnahme zu berücksichtigen, bei der an sehr vielen Entnahmestellen, wie Dusche oder Waschbecken, gleichzeitig heißes oder warmes Wasser abgenommen wird. Bei einer derartig großen Abnahmemenge werden vorteilhaft vier Wärmetauscher vorgesehen.

Damit die, oben angesprochene, benötigte maximale Trinkwasserentnahme erreicht wird, können bei Bedarf mehrere Zwei-Zonen-Pufferspeicher eingebaut und miteinander zu einer Einheit verbunden werden.

Die, ausgehend von der Trinkwasserentnahme, zu berücksichtigenden Anlagen können in ihrer Ausgestaltung somit völlig verschieden gestaltet werden und individuell nach einem Baukastenprinzip den jeweiligen Anforderungen angepasst werden.

Im Folgenden eine Auflistung der mit dem erfindungsgemäßen Zwei-Zonen-Pufferspeicher gleichzeitig zu erreichenden Vorteile:
- Pufferung der Energie auf hohem Temperaturniveau (bis 95°C; Fernwärme, Feststoffkessel, Blockheizkraftwerk BHKW ; ..)
- Keine Verkalkung der Trinkwarmwasser- Wärmetauscher in der Niedertemperaturzone (kleiner 60°C)
- Temperaturen in der Hoch ― und Niedertemperaturzone regelbar; z.B. 90°C in der Hochtemperaturzone und 60°C in der Niedertemperaturzone.
- Hohe Energieausbeute aus der Hochtemperaturzone durch geschichtete Entnahme. Daraus folgt: tiefe Rücklauftemperaturen für beispielsweise die Fernwärme.
- Legionellenfreie Trinkwassererwärmung möglich.
- Geringere Verkalkung gegenüber Plattenwärmetauschern, da Rippenrohrwärmetauscher in der Niedertemperaturzone angeordnet sind und einen deutlich größeren Strömungsquerschnitt haben.
- Robuste Bauweise des Zwei-Zonen-Pufferspeichers, da kaum mechanisch bewegte Verschleißteile verwendet werden (keine Strömungsschalter, keine Trinkwassermischer, keine Absperrventile, nur eine Umwälzpumpe erforderlich).
- Ein nachgeschalteter Trinkwassermischer ist nicht erforderlich, da eine sehr stabile Trinkwarmwasserauslauftemperatur von kleiner 5K erreicht wird. Bei größeren Anlagen wird eine deutlich geringere Warmwasserauslauf-Temperaturschwankung gegenüber Plattenwärmetauschern erreicht, insbesondere im Teillastbetrieb. Bei Plattenwärmetauschern wird ein kleiner Pufferspeicher (Ausgleichsgefäß) nachgeschaltet, zwecks Glättung der Auslauftemperatur.
- Bei hohem Trinkwarmwasserverbrauch und geringen Anschlussleitungen sowie geringen Raumhöhen und Türeinbringmaßen können die Zwei-Zonen-Pufferspeicher modular aufgebaut werden.
- Hohe Warmwasserleistung beispielsweise 30 kW / Trinkwarmwasserwärmetauscher
- Maximale Anzahl der Trinkwarmwasserwärmetauscher in der Niedertemperaturzone: vier Stück mit jeweils einer Leistung von beispielsweise 30 kW (Warmwasserleistung = 120 kW).
- Die Größe der Pufferspeicher ist variabel von z.B. 400l über 600l, 800l bis 1000l.
- Verbrühungsschutz durch eine niedrige, einstellbare Solltemperatur in der Niedertemperaturzone.
- unkontrollierter Wärmefluss von der Hochtemperaturzone in die Niedertemperaturzone wird durch die Ronde verhindert, daher zusätzlicher Verbrühungsschutz und geringere Kalkausfällung.

Weitere Merkmale und Einzelheiten der Erfindung ergeben sich aus den Ansprüchen und der nachfolgenden Beschreibung von in schematischen Zeichnungen dargestellten Ausführungsbeispielen der Erfindung. Es zeigen:
- Fig. 1: in einer Vorderansicht ein aus zwei nebeneinander angeordneten Behältern bestehendes Zwei-Zonen-Pufferspeicher-System mit unterschiedlichern Trinkwarmwasser - Wärmetauscheranschlüssen;
- Fig. 2: ein einzelner Behälter des Zwei-Zonen-Pufferspeicher-Systems nach Fig.1 in einer Vorder-, Seiten - und Draufsicht dargestellt;
- Fig. 3: eine Gesamtansicht eines Zwei-Zonen-Pufferspeicher-Systems, umfassend Behälter mit jeweils vier Wärmetauschern in der Niedertemperaturzone;
- Fig. 4: eine Ausführung und Ansicht wie zuvor gemäß Fig. 3 mit demgegenüber außerdem einem Wärmetauscher in der Hochtemperaturzone;
- Fig. 5: eine Gesamtansicht wie zuvor gemäß Fig. 3 mit demgegenüber drei Wärmetauschern in der Niedertemperaturzone; und
- Fig. 6: eine Ausführung eines Zwei-Zonen-Pufferspeicher - Systems wie gemäß Fig. 5, demgegenüber noch mit einem Wärmetauscher in der Hochtemperaturzone.

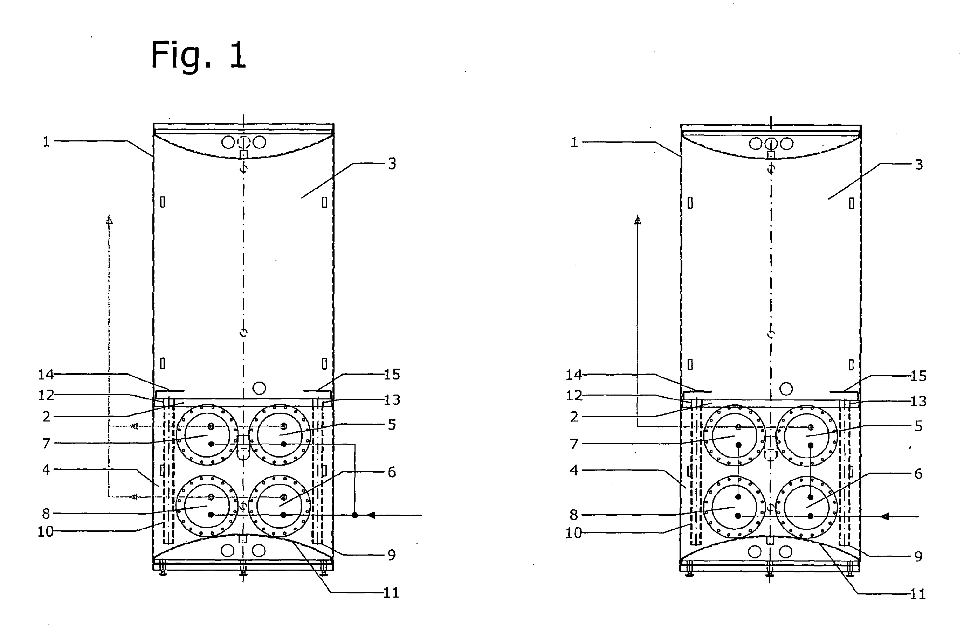

In Figur 1 ist ein aus zwei nebeneinander angeordneten Behältern 1 bestehendes Zwei-Zonen-Puffersystem dargestellt. Der geschlossene Behälter 1 wird durch eine Ronde 2 in eine obere Kammer 3 (Hochtemperaturzone) und eine untere Kammer 4 (Niedertemperaturzone) unterteilt. Die obere Kammer 3 beinhaltet heißes Pufferwasser. In der unteren Kammer 4 sind vier Wärmetauscher 5, 6, 7, und 8 angeordnet. Die untere Kammer 4 ist bei der Ausführung auf der linken Seite von Figur 1 mit einem Wärmetauscher - Anschluss nach Tichelmann versehen, während die Behälter - Ausführung auf der rechten Seite von Figur 1 in der unteren Kammer einen Wärmetauscher ― Anschluss nach Tichelmann mit einer Reihenschaltung aufweist, also eine Mischschaltung. Diese ermöglicht eine noch höhere Leistung als die reine Tichelmann ― Schaltung, da durch das Gegenstromprinzip noch bessere Wärmeübertragungswerte erreicht werden.

An der Ronde 2 sind zwei Rohre 9, 10 derartig befestigt, dass sie sich nach unten erstrecken und vor dem Behälterboden 11 enden. Die Rohre 9, 10 sind gegenüberliegend, d.h. mit einem möglichst großen Abstand voneinander angeordnet.

Die nach oben weisenden Öffnungen 12, 13 der Rohre 9, 10 enden auf der Oberseite der Ronde 2. Um eine Verwirbelung des einströmenden Pufferwassers aus der Niedertemperaturzone zu verringern bzw. zu vermeiden, sind mit einem Abstand zur Oberseite der Ronde 2 Prallbleche 14, 15 angeordnet. Diese lenken das einströmende Pufferwasser um und reduzieren dessen Fließgeschwindigkeit.

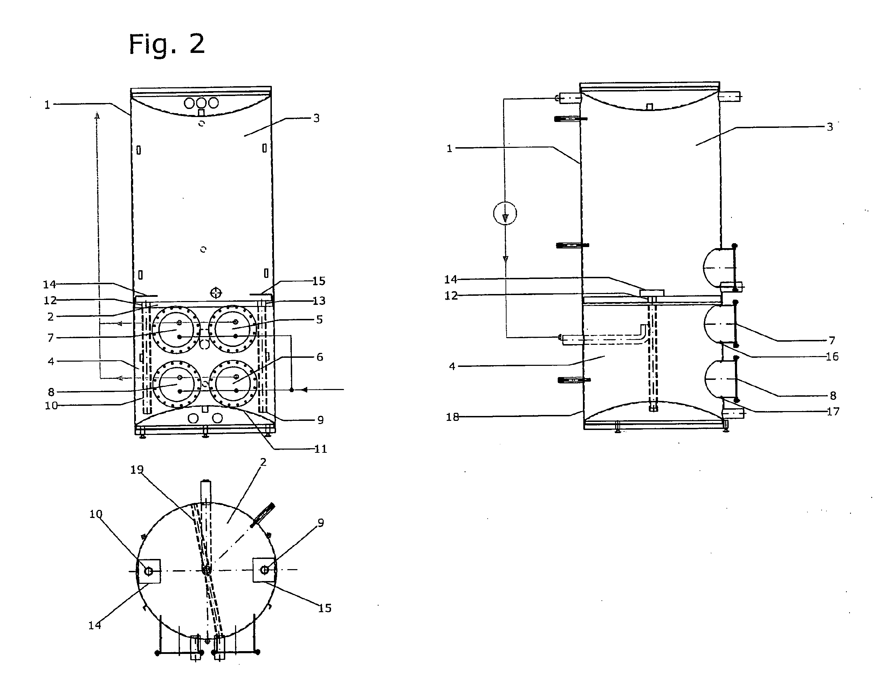

Die Figur 2 zeigt als Einzelheit einen Behälter 1 als Zwei-Zonen-Pufferspeicher in drei Ansichten. Die aus Figur 1 bekannten Bezeichnungen werden beibehalten. In der Draufsicht ist die voneinander entfernt gegenüberliegende Anordnung der Rohre 9, 10 und der Prallbleche 14, 15 am Rand der Ronde 2 zu sehen. Die Wärmetauscher 5, 6, 7 und 8 sind mittels Befestigungsstutzen 16, 17 in der Wand 18 der unteren Kammer 4 befestigt. Die im Behälter 1 eingesetzte Ronde 2 wird durch eine Profilleiste 19 verstärkt (gegen Durchbiegung).

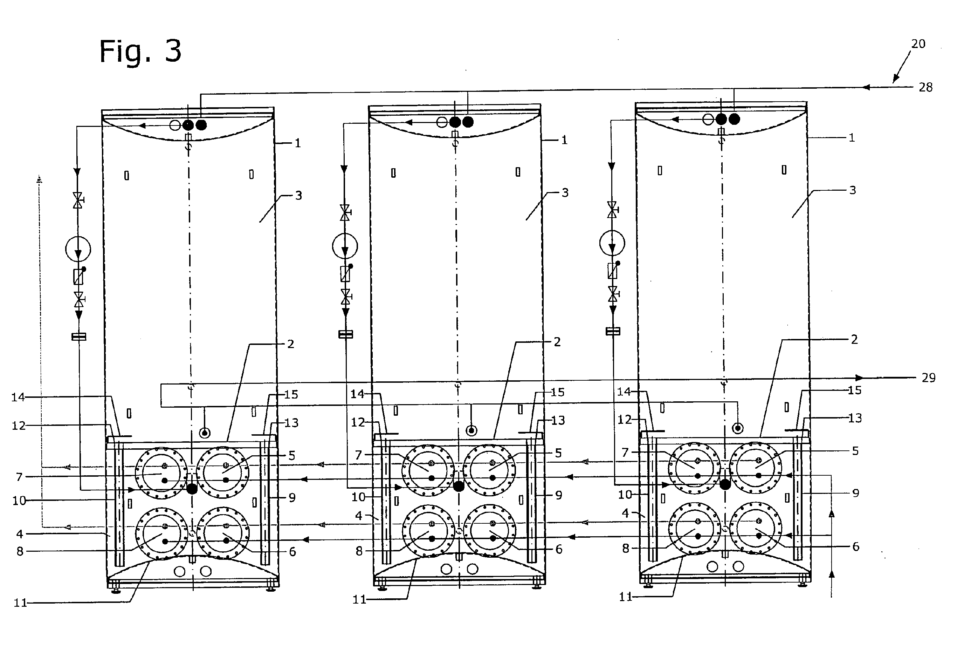

In den Figuren 3, 4, 5 und 6 ist der aus den Figuren 1 und 2 bekannte Zwei-Zonen-Pufferspeicher in jeweils in unterschiedlichen Ausführungsvarianten dargestellt, und zwar insbesondere einerseits betreffend die Anzahl der Behälter 1 und andererseits die Anzahl und Anordnung der Wärmetauscher.

Figur 3 zeigt eine Anlage, bestehend aus drei Zwei-Zonen-Pufferspeichern bzw. Behältern 1, wobei diese im Ausführungsbeispiel mit einer Fernwärmeleitung, einer Solarleitung oder dgl. 20, bestehend aus einem Vorlauf 28 und einem Rücklauf 29, verbunden sind. In den unteren Kammern 4 sind jeweils vier Wärmetauscher 5, 6, 7, 8 eingebracht.

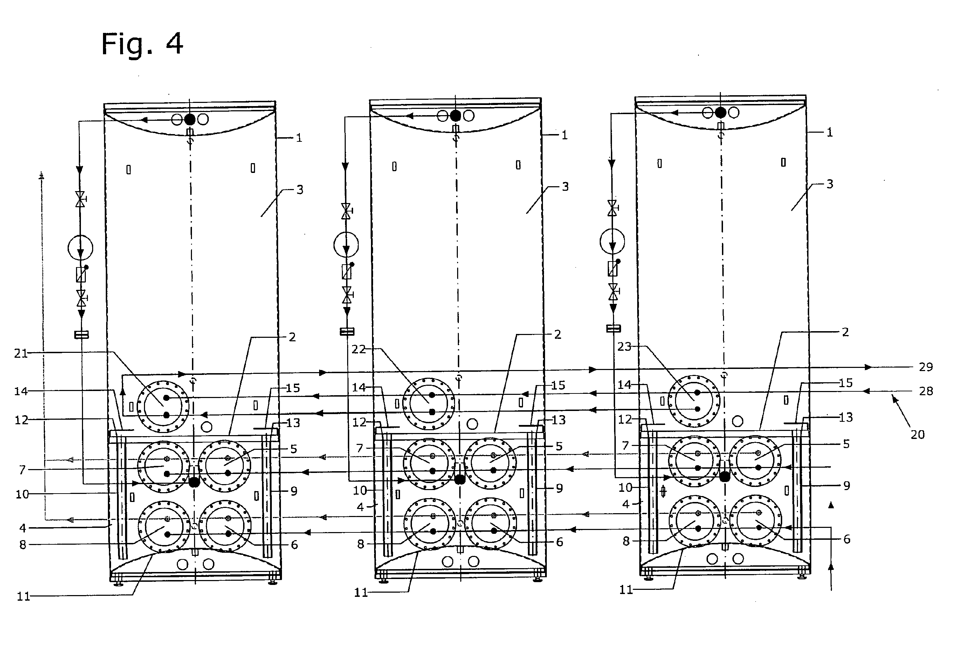

Eine Abänderung der aus Figur 3 bekannten Anlage zeigt Figur 4. Dort ist zusätzlich zu den vier Wärmetauschern 5, 6, 7, 8 in der unteren Kammer 4 eines jeden Behälters 1 außerdem jeweils ein Wärmetauscher 21, 22, 23 auch in der oberen Kammer 3 in deren unterem, der Niedertemperaturzone zugewandtem Bereich vorgesehen. Die Wärmetauscher 21, 22, 23 werden dabei mit einer Fernwärmeleitung, einer Solarleitung oder dgl. 20 verbunden. Der Vorlauf 28 der Fernwärmeleitung, der Solarleitung oder dgl. 20 wird dabei nach Tichelmann mit den Wärmetauschern 23, 22, 21 verbunden.
Der Vorlauf 28 ist bei einem Leitungsdruck von beispielsweise über 4 bar mit den Fernwärmetauschern 21, 22, 23 verbunden. Bei einem Leitungsdruck von unter 4 bar erfolgt eine direkte Verbindung mit der Hochtemperaturzone.

Die Größe und Anzahl der Zwei-Zonen-Pufferspeicher ist abhängig von der vorhandenen Anschlussleistung und von der zu entnehmenden Trinkwarmwassermenge. Die Anzahl der Wärmetauscher 5, 6, 7, 8 ist abhängig von der Spitzenzapfung, d. h. dem Bedarf der größten benötigten Menge an Trinkwarmwasser.

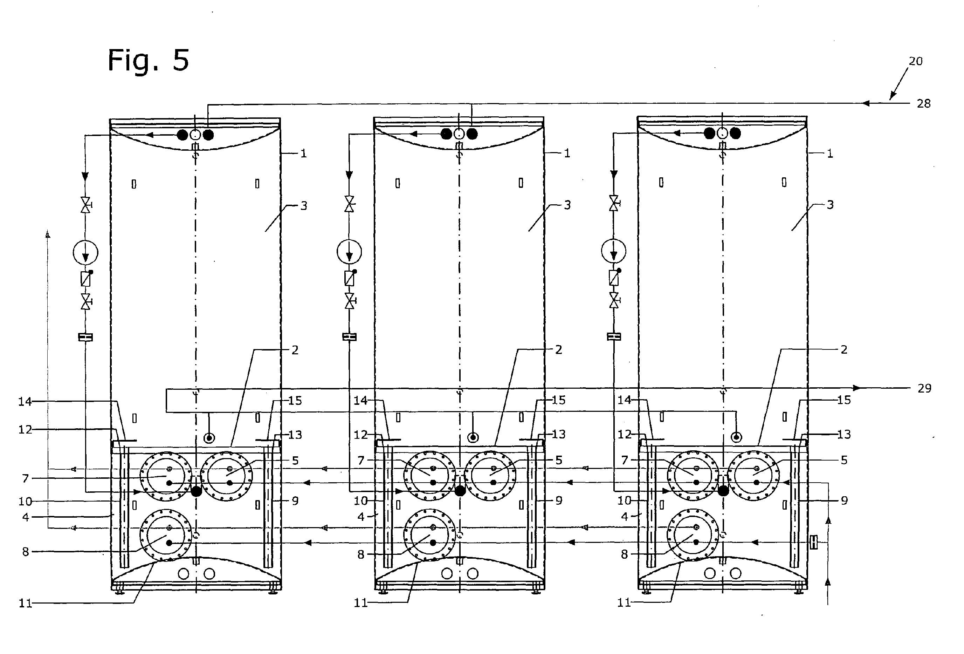

Ist der Bedarf der Abnahmemenge von Trinkwarmwasser für eine einzubauende Anlage geringer oder sollen andere Typen von Wärmetauschern eingebaut werden, so kann gemäß Figur 5 ein Wärmetauscher in der unteren Kammer 4 wegfallen, so dass nur drei Wärmetauscher 5, 7, 8 eingebaut werden.

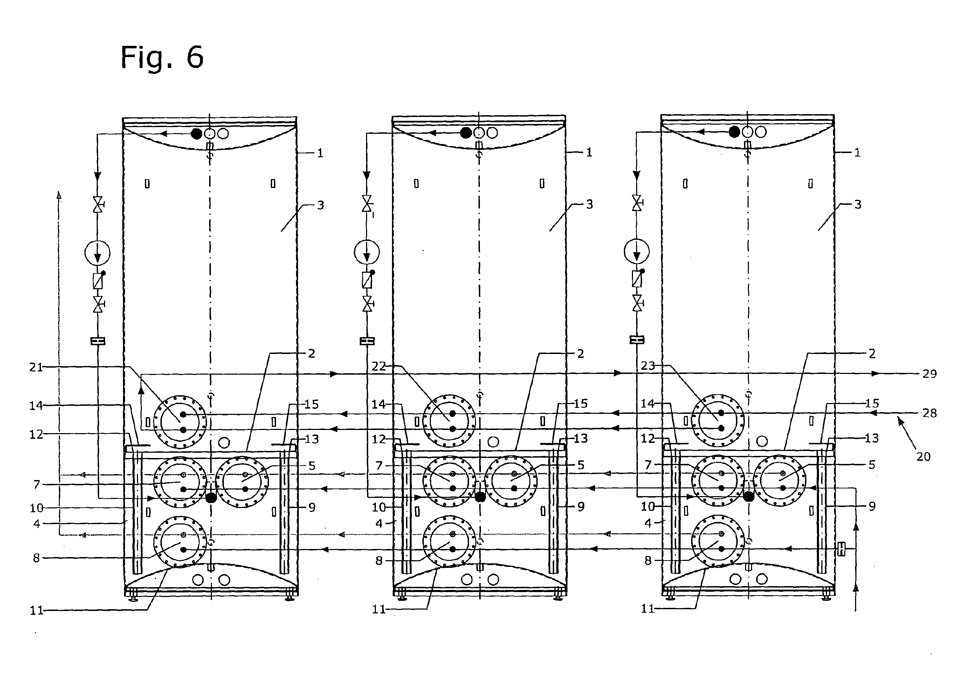

Eine Abwandlung des Anlagenaufbaus der Fig. 5 ist in Fig. 6 dargestellt. Die drei Wärmetauscher 5, 7, 8 der unteren Kammer sind hier durch Wärmetauscher 21, 22, 23 in der oberen Kammer 3 ergänzt worden, die im vorliegenden Ausführungsbeispiel mit einer Fernwärmeleitung 20 verbunden sind.

Die in den Figuren 4 und 6 dargestellten Wärmetauscher 21, 22, 23, die jeweils in der oberen Kammer 3 angeordnet sind, sind unabhängig von den Wärmetauschern 5, 6, 7, 8, welche jeweils in der unteren Kammer 4 angeordnet sind, mit der Fernwärmeleitung, der Solarleitung oder dgl. 20 verbunden.
Die in der unteren Kammer 4 eingebauten oder angeordneten Wärmetauscher 5, 6, 7, 8 dienen der Trinkwassererwärmung (wie in Figur 3 und Figur 5 dargestellt). Dabei werden die Wärmetauscher 5, 6, 7, 8 nach den bekannten Schaltungsarten miteinander verbunden.

## Patentansprüche

1. Geregelter Zwei-Zonen-Pufferspeicher für frische Trinkwassererwärmung, umfassend einen Behälter (1) zum Speichern von Energie in Pufferwasser und / oder Erwärmung bzw. Erhitzung von Trinkwasser, wobei der Behälter (1) mittels einer Ronde (2) in zwei Kammern (3, 4) unterteilt ist,
**dadurch gekennzeichnet,**
**dass** die obere Kammer (3) als Hochtemperaturbereich und die untere Kammer (4) als Niedertemperaturbereich ausgebildet ist.

2. Pufferspeicher nach Anspruch 1,
**dadurch gekennzeichnet,**
**dass** in der unteren Kammer (3) mindestens ein Trinkwarmwasser - Wärmetauscher (5, 6, 7, 8) angeordnet ist.

3. Pufferspeicher nach Anspruch 1,
**dadurch gekennzeichnet,**
**dass** die Ronde (2) mindestens ein Rohr (9, 10) aufweist.

4. Pufferspeicher nach Anspruch 3,
**dadurch gekennzeichnet,**
**dass** oberhalb der oberen Öffnungen (12, 13) der Rohre (9, 10) je ein Prallblech (14, 15) angeordnet ist.

5. Pufferspeicher nach einem der Ansprüche 1 bis 4,
**dadurch gekennzeichnet,**
**dass** ein oder mehrere Wärmetauscher (21, 22, 23) in der oberen Kammer (3) angeordnet ist bzw. sind.

6. Pufferspeicher nach Anspruch 5
**dadurch gekennzeichnet,**
**dass** die Wärmetauscher (21, 22, 23) mit einer Fernwärmeleitung, einer Solarleitung oder dgl. (20) verbunden sind.

7. Pufferspeicher nach einem der Ansprüche 1 bis 6,
**dadurch gekennzeichnet,**
**dass** an der Ronde (2) eine Profilleiste (19) befestigt ist.

8. Pufferspeicher nach einem der Ansprüche 1 bis 7,
**dadurch gekennzeichnet,**
**daß** die Ronde (2) aus einem Kunststoff mit geringer Wärmeleitfähigkeit besteht.
